# EUROPÄISCHE PATENTANMELDUNG

(11) **EP 4 847 153 A1**
(43) Veröffentlichungstag der Anmeldung: **02.12.2026**
(21) Anmeldenummer: 26162669.1
(22) Anmeldetag: 05.03.2026
(51) Int. Cl.: B08B 5/02, B08B 9/28, B08B 9/42, B65G 21/20, B65H 5/22, B08B 15/04

(54) **VORRICHTUNG UND VERFAHREN ZUR REINIGUNG VON EINSEITIG OFFENEN BEHÄLTERN**

(30) Priorität: 28.05.2025 DE 102025120938; 08.09.2025 DE 202025105332 U
(71) Anmelder: Trans Tech Hysek GmbH, 86438 Kissing (DE)
(72) Erfinder: Zeuke-Maier, Maximilian, 86152 Augsburg (DE)
(74) Vertreter: Charrier Rapp & Liebau

(57) **Zusammenfassung**

Vorrichtung zur Reinigung von einseitig offenen Behältern (B) mit einer Öffnung (O), umfassend eine Transporteinrichtung zum Transport der Behälter (B) und eine Ausblaseinheit (5) zum Einsprühen eines Prozessgases in die Behälter (B), wobei die Transporteinrichtung ein sich in einer Transportrichtung (T) linear erstreckendes Vakuumband (2) und eine Zufuhreinrichtung (1) für eine serielle Zuführung der Behälter (B) auf das Vakuumband (2) aufweist und dazu eingerichtet ist, die Behälter (B) in aufrecht stehender Position mit ihrer Öffnung (O) nach oben weisend von der Zufuhreinrichtung (1) auf das Vakuumband (2) zu übergeben und die Behälter (B) in dieser Position auf dem Vakuumband entlang der Transportrichtung (T) zu transportieren, die Ausblaseinheit (5) ist dazu eingerichtet, ein ionisiertes und/oder ein gereinigtes Prozessgas, insbesondere ionisierte oder gereinigte Luft, unter Druck auszugeben und durch die Öffnung (O) in die Behälter (B) zu sprühen.

## Beschreibung

### TECHNISCHER BEREICH

Die vorliegende Offenbarung betrifft eine Vorrichtung und ein Verfahren zur Reinigung von einseitig offenen Behältern, wie z.B. Dosen, Flaschen oder Gläsern, die zur späteren Befüllung mit Getränken oder Lebensmitteln oder mit pharmazeutischen oder kosmetischen Produkten vorgesehen sind. Insbesondere bezieht sich die Offenbarung auf eine Reinigungsvorrichtung und ein Reinigungsverfahren zur automatisierten und effizienten Innenreinigung von Behältern während ihres Transports in einer Abfüllanlage.

### HINTERGRUND

Auf dem Gebiet der Reinigung von einseitig offenen Behältern, wie beispielsweise Flaschen, Dosen oder Gläsern, ist es üblich, dass diese vor ihrer weiteren Verarbeitung oder Befüllung von Staub, Partikeln und anderen Verunreinigungen befreit werden. Bekannte Reinigungsvorrichtungen umfassen typischerweise mechanische, pneumatische oder kombinierte Einrichtungen, die darauf abzielen, die Innenräume der Behälter effizient zu reinigen. Hierbei werden häufig Luftstöße, Vakuumabsaugungen oder rotierende Bürsten eingesetzt, um anhaftende Partikel zu entfernen. In industriellen Abfüllanlagen ist es zudem üblich, die Behälter zur Befüllung in einer aufrechten Position zu halten, so dass die einseitig offenen Behälter durch die oben liegende Öffnung mit dem vorgesehenen Füllgut, wie z.B. Getränke oder Lebensmittel, befüllt werden können.

Gemäß bekannter Ansätze werden die Behälter häufig auf Förderbändern oder Transportketten durch die Abfüllanlage bewegt, wobei entlang des Transportweges Reinigungseinheiten angeordnet sind, um die Behälter vor der Befüllung zu reinigen. Die Reinigung erfolgt oftmals durch das Einblasen von Luft oder anderen Prozessgasen in die Öffnung der Behälter, um darin befindliche Staub- und Schmutzpartikel zu entfernen. Trotz der beträchtlichen Fortschritte auf dem Gebiet der Behälterreinigung bestehen weiterhin Herausforderungen hinsichtlich der vollständigen Entfernung von feinen Partikeln, sowie der Effizienz und der Geschwindigkeit des Reinigungsprozesses. Insbesondere bei hohen Produktionsgeschwindigkeiten und variierenden Behältergeometrien stoßen herkömmliche Reinigungssysteme an ihre Grenzen, was zu unzureichenden Reinigungsergebnissen, einem verminderten Durchsatz oder erhöhtem Installations- und Umrüstungsaufwand führen kann.

Weiterhin steigen die Anforderungen an eine flexible, zuverlässige und zugleich schonende Reinigung der Behälter stetig, insbesondere im Hinblick auf die Verarbeitung empfindlicher Behältermaterialien und die Einhaltung strenger Hygienestandards in der Lebensmittel-, Pharma- und Kosmetikindustrie.

Die DE 20 2017 107 177 U1 betrifft eine Vorrichtung zur Reinigung von einseitig offenen Behältern, wie Dosen oder Flaschen, insbesondere sogenannte "Rinser" zur Verwendung in einer Getränke-Abfüllanlage. Die Behälter werden mittels einer Transporteinrichtung schwerkraftgestützt durch einen in Transportrichtung geneigten, linearen Transportkanal geführt. Zur Reinigung wird ein fluides Reinigungsmedium, typischerweise Druckluft oder eine Reinigungsflüssigkeit, durch mehrere entlang der Transportrichtung angeordnete Düsen in das Innere der Behälter eingebracht, um Schmutz und Fremdpartikel zu entfernen.

Die bekannte Vorrichtung enthält einen sich entlang der Transportrichtung erstreckenden Luftkanal mit mehreren Luftaustrittsöffnungen, der mit einer Druckluftquelle verbunden ist. Die aus den Luftaustrittsöffnungen ausströmende Druckluft unterstützt die schwerkraftbedingte Bewegung der Behälter im Transportkanal und sorgt für eine gleichmäßige Transportgeschwindigkeit, auch bei Behältern mit rauer Oberfläche. Ein Nachteil der beschriebenen Vorrichtung besteht darin, dass die Behälter vor der Reinigung zunächst aus ihrer aufrechten Position durch eine Wendevorrichtung in eine gedrehte Lage gebracht werden müssen, sodass die Behälteröffnung nach unten oder seitlich weist und ein Reinigungsfluid, bspw. Wasser oder Druckluft, durch die nach unten oder seitlich weisende Öffnung mittels Düsen in den Behälter eingesprüht werden kann. Nach der Reinigung werden die Behälter durch eine weitere Wendevorrichtung wieder in ihre ursprüngliche, aufrechte Lage zurückgedreht, damit sie weiterverarbeitet und insbesondere befüllt werden können. Dieser zusätzliche Schritt des Wendens vor und nach der Reinigung erhöht die Komplexität der Anlage, vermindert die Verarbeitungsgeschwindigkeit und damit den Durchsatz und kann zu einem erhöhten Verschleiß sowie zu Störungen im kontinuierlichen Transportprozess führen.

Es ist daher ein der vorliegenden Erfindung zugrundeliegendes technisches Problem, eine verbesserte Lösung zur Reinigung von einseitig offenen Behältern bereitzustellen, die die Nachteile bekannter Systeme zumindest teilweise überwindet. Insbesondere soll eine effiziente und vollständige Reinigung der seriell zugeführten Behälter bei hoher Transportgeschwindigkeit und einem hohen Durchsatz erzielt werden.

### ZUSAMMENFASSUNG

Es ist daher eine Aufgabe der vorliegenden Erfindung, eine Vorrichtung und ein Verfahren zur Reinigung von einseitig offenen Behältern bereitzustellen, die bei hoher Transportgeschwindigkeit eine besonders effiziente, zuverlässige und schonende Reinigung der Behälter ermöglichen und dabei einen hohen Durchsatz, eine hohe Prozesssicherheit und Flexibilität bei unterschiedlichen Behälterformen und -größen gewährleisten. Weiterhin ist es eine Aufgabe der vorliegenden Erfindung eine einfache Integration der Reinigungsvorrichtung in Abfüllanlagen zu ermöglichen und dabei eine zuverlässige Inspektion sowie eine kontinuierliche und automatisierte Handhabung der Behälter sowie das Ausleiten von beschädigten oder nicht ausreichend gereinigten Behältern zu gewährleisten.

Diese Aufgaben werden mit einer Vorrichtung mit den Merkmalen des Anspruchs 1 und durch ein Verfahren mit den Merkmalen des Anspruchs 12 gelöst. Bevorzugte Ausführungsformen der Vorrichtung und des Verfahrens sind in den abhängigen Ansprüchen definiert.

Die erfindungsgemäße Vorrichtung umfasst eine Transporteinrichtung zum Transport der einseitig offenen Behälter und eine Ausblaseinheit zum Einsprühen eines Prozessgases durch die Öffnung in die Behälter, wobei die Transporteinrichtung ein sich in einer Transportrichtung linear erstreckendes Vakuumband und eine Zufuhreinrichtung für eine serielle Zuführung der Behälter auf das Vakuumband aufweist und dazu eingerichtet ist, die Behälter in aufrecht stehender Position mit ihrer Öffnung nach oben weisend von der Zufuhreinrichtung auf das Vakuumband zu übergeben und die Behälter in dieser Position auf dem Vakuumband entlang der Transportrichtung zu transportieren. Zur Reinigung der Behälter ist die Ausblaseinheit dazu eingerichtet, ein ionisiertes und/oder ein gereinigtes Prozessgas unter Druck auszugeben und durch die Öffnung in die Behälter zu sprühen.

Das Prozessgas kann insbesondere ionisierte oder gereinigte Luft sein. Anstelle von Luft können auch andere Prozessgase wie Stickstoff, Kohlendioxid, Edelgase und bevorzugt Argon, Sauerstoff oder Ozon oder Mischungen davon oder mit Luft eingesetzt werden. Bevorzugt ist das Prozessgas zumindest teilweise und mit niedriger Ionisierungsenergie leicht ionisierbar. Besonders vorteilhaft sind dabei Prozessgase, die einerseits leicht ionisierbar sind und andererseits eine desinfizierende bzw. eine antimikrobielle Wirkung haben, da solche Gase neben der Reinigung der Behälter auch eine Desinfizierung des Behälterinneren bewirken können. Daher ist bspw. reaktiver Sauerstoff (ROS) in den Formen O·, O₂⁻, O₃, oder Singulett-Sauerstoff sowie Ozon besonders bevorzugt. Auch Stickoxide wie NO/NO₂ wirken stark antimikrobiell und sind leicht ionisierbar und stellen daher geeignete Kandidaten für die Auswahl des Prozessgases dar.

Gemäß einem Aspekt der Erfindung wird daher eine Vorrichtung zur Reinigung von einseitig offenen Behältern bereitgestellt, die insbesondere darauf ausgelegt ist, die Behälter in aufrechtstehender Position mit der Öffnung nach oben zu transportieren und zu reinigen. Die Transporteinrichtung umfasst dabei insbesondere ein linear entlang einer Transportrichtung verlaufendes Vakuumband, welches die Behälter fixiert und eine serielle Durchführung der Behälter durch die Reinigungsvorrichtung ermöglicht. Die Übergabe der Behälter erfolgt von der Zufuhreinrichtung auf das Vakuumband, wobei die Behälter während des gesamten Transports durch die Reinigungsvorrichtung ihre aufrechte Position beibehalten. Die Ausblaseinheit ist darauf eingerichtet, ein ionisiertes und/oder gereinigtes Prozessgas, insbesondere ionisierte oder gereinigte Luft, unter Druck durch die Öffnung in den Innenraum der Behälter zu sprühen, um darin befindliche Schmutz- und Staubpartikel aus dem Behälter zu blasen. Das ionisierte und/oder gereinigte Prozessgas wirbelt dabei die Partikel im Behälter auf und trägt diese durch die Strömung des Prozessgases aus dem Behälterinneren aus.

Bevorzugt handelt es sich bei dem Prozessgas um ein ionisiertes Gas, bspw. um ionisierte Luft. Das ionisierte Prozessgas ist dabei in der Lage, Staub- und Schmutzpartikel elektrostatisch zu binden und dadurch mit dem Gasstrom aus dem Behälter auszutragen. Dabei müssen die Behälter zum Ausblasen mit dem ionisierten Prozessgas nicht gedreht werden und können in ihrer ursprünglichen aufrechten Position durch die Reinigungsvorrichtung geführt und gereinigt werden. Dadurch wird die Gefahr von Verformungen oder Beschädigungen empfindlicher Behälter deutlich reduziert. Das gezielte Einbringen von ionisiertem oder gereinigtem Prozessgas ermöglicht eine effektive Entfernung von Staub und Schmutzpartikeln aus dem Inneren der Behälter, ohne dass die Behälter gedreht werden müssen, wodurch eine Verbesserung der Reinigungsleistung und eine Steigerung der Effizienz im Reinigungs- und Abfüllprozess erzielt werden kann.

Die Verwendung eines Vakuumbandes gewährleistet dabei eine zuverlässige Fixierung der Behälter während ihres Transports durch die Reinigungsvorrichtung, Die Vorrichtung eignet sich daher besonders für Anwendungen, in denen eine hohe Taktung bzw. ein hoher Durchsatz und eine schonende Behandlung der Behälter erforderlich sind.

Die Behälter verbleiben bevorzugt während des gesamten Transports auf dem Vakuumband in ihrer aufrechten Position und werden insbesondere beim Transport durch die Vorrichtung nicht gedreht oder Kopfüber gestellt.

Nach einer bevorzugten Ausführungsform umfasst die Reinigungsvorrichtung zusätzlich eine Absaugeinrichtung, welche während des Einsprühens des Prozessgases in die Behälter das Prozessgas absaugt. Hierbei ist die Absaugeinrichtung zweckmäßig so ausgestaltet, dass sie in unmittelbarer Nähe zur Öffnung der Behälter positioniert ist oder Absaugstutzen aufweist, die in der Nähe der Öffnung der seriell durch die Reinigungsvorrichtung durchlaufenden Behälter positioniert sind. Der Begriff Absaugeinrichtung bezeichnet dabei ein technisches Mittel, das durch Unterdruck das mittels der Ausblaseinheit eingesprühte Prozessgas (insb. Luft) sowie darin enthaltene, und speziell an den Ionen des ionisierten Prozessgases elektrostatisch anhaftende Partikel, gezielt aus dem Innenraum der Behälter entfernt.

Um das Prozessgas mit den daran anhaftenden Partikeln effizient aus den Behälter absaugen zu können, umfasst die Absaugeinrichtung bevorzugt einen Absaugkanal, der bspw. als Leitung oder Rohrkanal ausgebildet sein kann und bevorzugt in der Nähe der Öffnungen der Behälter angeordnet ist. Der Absaugkanal ist dazu eingerichtet, das mit Partikeln beladene Prozessgas aus den Behältern abzusaugen, wozu der Absaugkanal mit Unterdruck beaufschlagt werden kann. Vorteilhaft ist dabei eine Anordnung des Absaugkanals entlang des Vakuumbands oder zumindest entlang eines Abschnitts des Vakuumbands. Vorteilhaft erstreckt sich der Absaugkanal über den Bereich, in dem sich die Ausblaseinheit erstreckt. Dies stellt sicher, dass die Absaugung unmittelbar dort erfolgt, wo die Behälter während des Transports durch das Einsprühen des Prozessgases gereinigt werden, so dass dadurch aufgewirbelte Partikel und Verunreinigungen möglichst vollständig und ohne Verteilung in die Umgebung durch die Absaugeinrichtung entfernt werden können.

Gemäß einem Aspekt der Erfindung ist nach einer Ausführungsform vorgesehen, dass der Absaugkanal wenigstens ein Absaugrohr mit einer Mehrzahl von Öffnungen aufweist und die Absaugeinrichtung dazu eingerichtet ist, den Absaugkanal mit Unterdruck zu beaufschlagen, wobei der Absaugkanal hierfür über einen Absauganschluss mit einer bevorzugt von der Reinigungsvorrichtung separierten Absauganlage verbindbar ist. Das mit mehreren Öffnungen versehene Absaugrohr ermöglicht eine gleichmäßige und flächendeckende Erfassung der durch das Einblasen des Prozessgases aufgewirbelten Partikel und Verunreinigungen. Die Mehrzahl von Öffnungen sorgt dafür, dass der Unterdruck nicht punktuell, sondern über eine größere Fläche und entlang der gesamten Reinigungsstrecke in der Reinigungsvorrichtung wirkt, wodurch eine besonders effektive Absaugung des kontaminierten Prozessgases und der darin enthaltenen Partikel erzielt wird.

Die Ausgestaltung als Absaugkanal, der mit Unterdruck beaufschlagt wird und über mehrere Absaugöffnungen verfügt, gewährleistet, dass das abgesaugte Prozessgas gleichmäßig über die gesamte Reinigungsstrecke sowie zuverlässig und kontrolliert abgeführt wird, was die Reinigungsqualität steigert und eine Rückverteilung von Partikeln in die Behälter verhindert. Die Möglichkeit, den Absaugkanal über einen Absauganschluss mit einer externen, von der Reinigungsvorrichtung separierten Absauganlage zu verbinden, bietet eine hohe Flexibilität hinsichtlich der Integration in unterschiedliche Produktionsumgebungen, stellt eine kostengünstige Lösung dar und ermöglicht die Nutzung leistungsstarker zentraler Absaugsysteme, was insbesondere bei hohen Transportgeschwindigkeiten oder bei der Verarbeitung von stark kontaminierten Behältern vorteilhaft ist.

Durch die gezielte, gleichmäßige Anordnung und Ausgestaltung der Absaugöffnungen entlang des Absaugkanals ist eine Anpassung an unterschiedliche Behältergeometrien und -größen möglich, was die Vielseitigkeit der Vorrichtung erhöht und eine Anpassung an verschiedene Produktionsanforderungen erlaubt.

Gemäß einem weiteren Aspekt der Erfindung ist nach einer Ausführungsform vorgesehen, dass die Absaugeinrichtung mehrere Absaugstutzen aufweist, die oberhalb des Vakuumbands angeordnet und bevorzugt in Bezug auf das Vakuumband höhenverstellbar sind. Dabei sind die Absaugstutzen zweckmäßig an dem Absaugkanal und insbesondere in einem vorgegebenen Abstand zueinander angeordnet und strömungsleitend mit diesem verbunden. Dadurch wird eine gleichmäßige und strömungsoptimierte Absaugung des Prozessgases aus den Behältern über die gesamte Länge des Absaugkanals ermöglicht.

Dabei können die Absaugstutzen durch die bevorzugte Höhenverstellbarkeit gezielt oberhalb der auf dem Vakuumband transportierten Behältern positioniert werden. Die Absaugstutzen sind dabei zweckmäßig so ausgelegt, dass sie die durch das Einblasen von ionisiertem oder gereinigtem Prozessgas aufgewirbelten Partikel und Verunreinigungen effizient absaugen können. Die Anordnung oberhalb des Vakuumbands ermöglicht es, die Absaugung unmittelbar nach dem Einblasen des Prozessgases durchzuführen, wodurch eine schnelle und effektive Entfernung der Verunreinigungen aus dem Innenraum der Behälter erzielt wird.

Die bevorzugte Höhenverstellbarkeit der Absaugstutzen bringt einen weiteren Vorteil mit sich, da sie eine flexible Anpassung an unterschiedliche Behältergrößen und -formen erlaubt. Dadurch kann der Abstand zwischen den Absaugstutzen und der Öffnung der Behälter jeweils so gewählt werden, dass eine optimale Strömungsführung und damit eine maximale Absaugleistung gewährleistet ist, unabhängig von der Höhe oder dem Durchmesser der zu reinigenden Behälter. Dies trägt dazu bei, die Reinigungsqualität weiter zu steigern und den Prozess an wechselnde Anforderungen anzupassen. Die Mehrzahl der Absaugstutzen ermöglicht zudem eine parallele oder sequenzielle Absaugung an mehreren Positionen entlang des Vakuumbands, was insbesondere bei hohen Durchsatzraten oder bei der Reinigung von Behältern mit unterschiedlichen Kontaminationen von Vorteil ist. Ein weiterer Vorteil ergibt sich daraus, dass durch die gezielte und positionsgenaue Anordnung der Absaugstutzen das Risiko einer Rückkontamination minimiert wird, da die aufgewirbelten Partikel lokal unmittelbar im Bereich der Dosenöffnungen abgesaugt werden, bevor sie sich in der Reinigungsvorrichtung verteilen können.

Der Betrieb der Ausblaseinheit und der Absaugeinrichtung ist vorzugsweise zeitlich und strömungstechnisch synchronisiert, indem die beiden Einheiten so angeordnet sind und betrieben werden, dass das eingeblasene Prozessgas - beispielsweise ionisierte oder gereinigte Luft - nach dem Aufwirbeln von Staub und Partikeln im Behälter direkt durch die Absaugeinrichtung erfasst und abgeführt wird.

In einer bevorzugten Ausführungsform umfasst die Reinigungsvorrichtung ein Gehäuse, durch das das Vakuumband verläuft. Dabei ist die gesamte Absaugeinrichtung oder zumindest ein Absaugkanal der Absaugeinrichtung in dem Gehäuse angeordnet. Beim Betrieb der Absaugeinrichtung wird dabei in dem Gehäuse ein Unterdruck gegenüber dem Umgebungsdruck (atmosphärischer Luftdruck) erzeugt. Dies gewährleistet ein effizientes und vollständiges Absaugen des Prozessgases und der Schmutz- und Staubpartikel aus den Behältern. Gemäß einem Aspekt der Erfindung wird dadurch ein geschlossenes Reinigungssystem geschaffen, bei dem die Verunreinigungen nicht in die Umgebungsluft gelangen, sondern zuverlässig aus den Behältern entfernt und aufgefangen werden können.

Das Gehäuse dient dabei als abgeschlossener Raum, in dem die Absaugeinrichtung arbeitet, wodurch eine gezielte Steuerung des Luftstroms und eine Vermeidung von Leckagen oder unerwünschtem Austritt von Partikeln in die Produktionsumgebung erreicht wird. Die Erzeugung eines Unterdrucks im Gehäuse durch die Absaugeinrichtung bewirkt, dass die Luftströmung stets in Richtung des Absaugkanals erfolgt und somit eine kontinuierliche und zuverlässige Entfernung der verunreinigten Luft sichergestellt ist, ohne dass das aus den Behältern abgesaugte Prozessgas das Gehäuse verlassen kann. Ein Vorteil dieser Ausgestaltung liegt in einer verbesserten Prozesssicherheit, da die Reinigung der Behälter nicht nur durch das Einblasen von ionisiertem oder gereinigtem Prozessgas, sondern auch durch die unmittelbare Absaugung der aufgewirbelten Partikel unterstützt wird. Dadurch wird die Gefahr einer Rückkontamination der Behälter durch in die Behälter absinkende Partikel minimiert. Die gezielte Absaugung des Gasstroms entlang der Reinigungsstrecke in dem Gehäuse trägt zudem dazu bei, dass auch bei hohen Bandgeschwindigkeiten und variierenden Behälterformaten eine gleichbleibend hohe Reinigungsleistung erzielt werden kann.

Zum Abtransport des mit den Staub- und Schmutzpartikeln beladenen Prozessgases aus dem Gehäuse ist bevorzugt in dem Gehäuse und speziell im Boden des Gehäuses ein Rohrstutzen vorgesehen, der über eine Absaugleitung mit einer Absauganlage verbunden werden kann. Die Absauganlage kann dabei entweder in die Reinigungsvorrichtung integriert sein, oder es kann bevorzugt auch eine externe Absauganlage dafür eingesetzt werden, insbesondere wenn ohnehin im Umfeld der Abfüllanlage, in der die Reinigungsvorrichtung betrieben wird, eine Absauganlage zur Erzeugung eines Unterdrucks vorhanden ist.

Dies bringt mehrere Vorteile mit sich: Zum einen wird die Effizienz der Reinigung erhöht, da die aufgewirbelten Partikel unmittelbar und vollständig mit hoher Saugleistung abgesaugt und aus dem Gehäuse über den Absaugkanal und die außerhalb des Gehäuses verlaufende Absaugleitung abtransportiert werden können. Zum anderen wird die Belastung der Produktionsumgebung durch freigesetzte Partikel minimiert, was die Hygiene und Sicherheit im Abfüllbereich verbessert. Die Absaugeinrichtung trägt zudem dazu bei, dass das Prozessgas nach dem Kontakt mit dem Behälterinneren nicht unkontrolliert entweicht, sondern gezielt abgeführt und gegebenenfalls gefiltert oder wiederverwendet werden kann. Die Synchronisation zwischen Ausblaseinheit und Absaugeinrichtung kann dabei durch eine gemeinsame Steuerung erfolgen, sodass der Reinigungsprozess und die Absaugung optimal auf die Transportgeschwindigkeit sowie die Größe und Position der Behälter abgestimmt werden kann. Insgesamt ermöglicht diese Ausgestaltung eine kontinuierliche, effiziente und prozesssichere Reinigung der Behälter.

Besonders vorteilhaft ist es dabei, wenn der Boden des Gehäuses als Wanne mit einer Senke, bspw. im Zentrum des Bodens, ausgebildet und im Bereich der Senke ein Rohrstutzen oder eine Öffnung im Boden zum Anschluss der Absaugleitung angeordnet ist. Dadurch können die aus den Behältern entfernten Partikel in der Senke des als Wanne ausgebildeten Gehäusebodens gesammelt und über die Absaugleitung mittels der Absauganlage aus dem Gehäuse abgesaugt werden.

In der Ausführungsform der Reinigungsvorrichtung, in der diese ein Gehäuse umfasst, ist zweckmäßig vorgesehen, dass auch die Ausblaseinheit in dem Gehäuse angeordnet ist. Die Ausblaseinheit dient dazu, einen gezielten Strom des Prozessgases, vorzugsweise ionisierte Luft, in das Innere der Behälter einzubringen, um dort vorhandene Partikel und Verunreinigungen aufzuwirbeln. Das Gehäuse definiert dabei eine abgeschlossene Reinigungszone, in der die Reinigungsvorgänge kontrolliert und abgeschirmt von der Umgebung ablaufen können. Das Vakuumband, welches die Behälter in aufrechter Position fixiert, durchläuft das Gehäuse, sodass die zu reinigenden Behälter während ihres Transports durch die vom Gehäuse abgegrenzte Reinigungszone geführt werden. Ein Vorteil dieser Anordnung liegt in einer verbesserten Prozesssicherheit, da die Reinigung unabhängig von äußeren Einflüssen erfolgt und die Gefahr einer Kontamination durch verunreinigte Umgebungsluft reduziert wird. Weiterhin ermöglicht die Integration der Ausblaseinheit in das Gehäuse eine kompakte Bauweise und eine gezielte Steuerung des Gasstroms, was zu einer erhöhten Reinigungsleistung und einer effizienteren Entfernung von Partikeln führt. Ein weiterer Vorteil ergibt sich aus der kontinuierlichen seriellen Führung der Behälter durch das Gehäuse mittels des Vakuumbandes, wodurch ein gleichmäßiger und störungsfreier Ablauf des Reinigungsprozesses gewährleistet wird.

Gemäß einem Aspekt der Erfindung ist vorgesehen, dass die Ausblaseinheit über einen Anschluss mit einer Prozessgasquelle verbunden ist, wobei die Prozessgasquelle das unter Druck stehende Prozessgas, insbesondere Luft, bereitstellt und hierfür bevorzugt einen Verdichter umfasst. Der Begriff Ausblaseinheit bezeichnet dabei das funktionale Element, welches das Prozessgas gezielt in das Innere der Dosen oder Behälter einleitet, um dort die Reinigung zu bewirken. Die Prozessgasquelle stellt das Prozessgas - vorzugsweise Luft - unter einem bestimmten Druck bereit, sodass eine effektive Reinigung durch Aufwirbeln und Austragen von Partikeln ermöglicht wird. Der Verdichter der Prozessgasquelle dient dazu, das Gas auf den benötigten Druck zu bringen, wodurch eine gleichmäßige und leistungsfähige Reinigung erzielt werden kann. Dabei kann der vom Verdichter erzeugte Druck des Prozessgases zweckmäßig an die Größe und Geometrie der Behälter sowie an die Transportgeschwindigkeit angepasst werden.

Gemäß einem weiteren Aspekt der Erfindung ist nach einer Ausführungsform die Ausblaseinheit so ausgestaltet, dass sie wenigstens ein Rohr mit einem Anschlussstutzen umfasst, wobei der Anschlussstutzen über eine Rohr- oder Schlauchleitung eine fluidleitende Verbindung zur Prozessgasquelle herstellen kann. Das Rohr weist dabei zweckmäßig eine Mehrzahl von Ausblasdüsen zum Ausblasen des Prozessgases, insbesondere der ionisierten oder gereinigten Luft, auf.

Die Mehrzahl von Ausblasdüsen ermöglicht eine gleichmäßige und gezielte Verteilung des Prozessgases entlang der Reinigungsstrecke, die die Behälter seriell durchlaufen. Dabei sind die Ausblasdüsen auf das Vakuumband hin ausgerichtet, um den Strom des Prozessgases gezielt durch die Öffnungen in das Innere der Behälter zu leiten, während die Behälter die Reinigungstrecke durchlaufen. Die gezielte Ausrichtung der Ausblasdüsen nach unten auf das Vakuumband hin trägt dazu bei, dass das Prozessgas mit hoher Präzision in die Behälteröffnung eingebracht wird, wodurch die Aufwirbelung und Entfernung von Partikeln und Verunreinigungen maximiert wird.

Bevorzugt ist das Rohr der Ausblaseinheit in Bezug auf das Vakuumband höhenverstellbar. Dies bietet einen Vorteil hinsichtlich der Anpassungsfähigkeit an unterschiedliche Behälterformate und Produktionsanforderungen, da die Position der Ausblasdüsen flexibel auf die jeweilige Höhe der Behälter eingestellt werden kann.

Gemäß einem Aspekt der Erfindung umfasst die Ausblaseinheit ein Ionisierungsgerät zur (partiellen) Ionisierung des Prozessgases, insbesondere zur (partiellen) Ionisierung von Luft, wobei das Ionisierungsgerät insbesondere als Ionisierungsstab ausgebildet ist, der in dem Rohr der Ausblaseinheit angeordnet ist. Das Ionisierungsgerät bewirkt eine elektrische Aufladung der im Prozessgas enthaltenen Moleküle, wodurch insbesondere Staubpartikel und andere Verunreinigungen im Behälterinneren elektrostatisch durch das eingesprühte ionisierte Prozessgas gebunden werden können. Die bevorzugte Ausgestaltung des Ionisierungsgeräts als Ionisierungsstab, der innerhalb des Rohrs der Ausblaseinheit positioniert ist, ermöglicht eine besonders kompakte und effiziente Integration des Ionisierungsgeräts sowie eine gleichmäßige Ionisierung des Prozessgases entlang der gesamten Reinigungsstrecke. Dadurch wird die Wirksamkeit der Partikelentfernung im Behälterinneren gesteigert, da das ionisierte Gas unmittelbar an der Austrittsstelle und über die gesamte Reinigungsstrecke zur Verfügung steht.

Ergänzend oder alternativ zu dem Ionisierungsgerät kann die Ausblaseinheit auch ein Gerät zur Reinigung des Prozessgases, insbesondere ein Luftreinigungsgerät, enthalten. Das Gerät zur Reinigung des Prozessgases kann bspw. als Gaswäscher zur Reinigung von Gasen mittels Wasser oder einer anderen Reinigungsflüssigkeit ausgebildet sein. Das Gerät zur Reinigung des Prozessgases kann auch als Filter ausgebildet sein oder einen Filter umfassen, mit dem das Prozessgas gereinigt werden kann, indem Schmutz- und Fremdstoffe durch Filterung aus dem Prozessgas entfernt werden. Weiterhin kann das Gerät zur Reinigung des Prozessgases auch eine Gasreinigung mittels Bestrahlung mit UV-Strahlung durchführen.

Gemäß einem Aspekt der Erfindung ist eine Kontrolleinheit vorgesehen, die stromabwärts des Vakuumbands oder am Ende des Vakuumbands angeordnet und zur Inspektion der gereinigten Behälter eingerichtet ist, wobei die Inspektion insbesondere optisch und/oder sensorisch erfolgt. Die Kontrolleinheit ist insbesondere als ECI (empty-can-inspection)-Einheit ausgebildet und dient dazu, das Reinigungsergebnis der gereinigten Behälter nach Durchlaufen der Reinigungsstrecke zu überprüfen. Zur optischen Inspektion der Behälter werden dabei bildgebende Systeme eingesetzt. Alternativ oder ergänzend dazu können andere Sensoren, wie z.B. kapazitive Sensoren Berührungssensoren oder Geruchssensoren, eingesetzt werden, um Verunreinigungen, Beschädigungen oder andere Qualitätsmerkmale der Behälter zu erkennen. Ein Vorteil der Kontrolleinheit liegt darin, dass eine zuverlässige und automatisierte Qualitätskontrolle direkt im Anschluss an den Reinigungsprozess ermöglicht wird, wodurch fehlerhafte oder unzureichend gereinigte Behälter frühzeitig erkannt und aus dem Produktionsprozess entfernt werden können. Dies trägt zu einer Steigerung der Prozesssicherheit und zur Reduktion von Ausschuss im Abfüllprozess bei.

Gemäß einem weiteren Aspekt der Erfindung umfasst die Transporteinrichtung eine stromabwärts des Vakuumbands angeordnete Abfuhreinrichtung, die eine serielle Abführung der gereinigten Behälter ermöglicht. Der Begriff stromabwärts bezieht sich dabei auf die Transportrichtung und meint eine Position direkt hinter dem Vakuumband, sodass die gereinigten Behälter unmittelbar vom Vakuumband auf die Abfuhreinrichtung seriell übergeben werden können. Die serielle Abführung bedeutet, dass die Behälter nacheinander und nahtlos vom Vakuumband auf die Abfuhreinrichtung übergeben werden, was einen kontinuierlichen Behälterstrom gewährleistet und eine kontrollierte Übergabe an nachfolgende Prozessschritte in der Abfüllanlage, wie etwa Inspektion, Befüllung oder Verpackung, ermöglicht. Dadurch kann die Taktung der Gesamtanlage aufrechterhalten und eine reibungslose Kopplung an nachfolgende Produktions- oder Verarbeitungsmodule ermöglicht werden.

Gemäß einem weiteren Aspekt der Erfindung ist nach einer Ausführungsform vorgesehen, dass die Abfuhreinrichtung einen mechanischen Ausschleuser (auch als Pusher bezeichnet) umfasst, mit dem unzureichend gereinigte oder deformierte Behälter gezielt aus dem seriellen Strom der Behälter entfernt werden können. Der Begriff mechanischer Ausschleuser bezieht sich hierbei auf eine Vorrichtung, die in der Lage ist, einzelne Behälter durch eine gezielte mechanische Bewegung bspw. lateral oder aus der Hauptförderrichtung (Transportrichtung der Behälter) herauszuschieben, ohne dass der gesamte Transportfluss unterbrochen werden muss. Die Kommunikation zwischen der Kontrolleinheit, welche das Reinigungsergebnis visuell und/oder sensorisch prüft, und dem mechanischen Ausschleuser erfolgt typischerweise über elektrische oder elektronische Signalübertragung, wobei die Kontrolleinheit nach erfolgter Detektion eines unzureichend gereinigten oder deformierten Behälters ein Steuersignal an den Pusher übermittelt. Der Pusher wird daraufhin aktiviert und entfernt den betreffenden Behälter aus dem laufenden Produktionsstrom. Diese Interaktion zwischen Kontrolleinheit und dem mechanischen Ausschleuser (Pusher) kann durch eine direkte elektrische Verbindung, beispielsweise über ein Bussystem oder eine SPS-gesteuerte Schnittstelle, realisiert sein, wodurch eine schnelle und zuverlässige Reaktion auf erkannte Fehler gewährleistet wird. Der Vorteil eines solchen mechanischen Ausschleusers liegt darin, dass eine automatische und selektive Entfernung von fehlerhaften Behältern ermöglicht wird, ohne dass der gesamte Produktionsprozess gestoppt oder verlangsamt werden muss. Dies führt zu einer deutlichen Steigerung der Prozesssicherheit und Produktqualität und hält den Durchsatz der gesamten Abfüllanlage aufrecht, da nur einwandfrei gereinigte und nicht deformierte Behälter dem nachfolgenden Abfüllprozess zugeführt werden. Durch die gezielte Kombination von optischer und/oder sensorischer Kontrolle und mechanischer Ausschleusung wird eine zuverlässige und kontinuierliche Überwachung sowie eine unmittelbare Reaktion auf Abweichungen im Reinigungsergebnis oder auf mechanische Deformationen der Behälter realisiert, wodurch eine signifikante Reduktion von Ausschuss und Nachbearbeitungsaufwand erreicht werden kann.

Gemäß einem Aspekt der Erfindung ist daher vorgesehen, dass der mechanische Ausschleuser (Pusher) mit der Kontrolleinheit gekoppelt ist und so ausgestaltet wird, dass er in Abhängigkeit eines von der Kontrolleinheit gelieferten Signals unzureichend gereinigte oder deformierte Behälter aus dem seriellen Strom der Behälter entfernt.

Gemäß einem weiteren Aspekt der Erfindung ist vorgesehen, dass die Behälter einen Boden aufweisen, der vom Vakuumband angesaugt wird, wodurch die Behälter während des Transports auf dem Vakuumband in ihrer aufrechten Position standsicher fixiert sind. Das Vakuumband ist ein entlang der Transportrichtung bewegtes Transportband, das mittels Unterdruck die Behälter fixiert und so ein Kippen oder Verrutschen während des Transports verhindert. Dadurch wird erreicht, dass die Behälter während der gesamten Reinigungs- und Transportphase durch die Reinigungsvorrichtung zuverlässig in ihrer vertikalen Orientierung gehalten werden, ohne dass ein mechanisches Drehen oder Wenden erforderlich ist. Ein Vorteil dieser Maßnahme liegt in einer Reduktion der mechanischen Beanspruchung der Behälter, was insbesondere bei leichten oder empfindlichen Materialien das Risiko von Verformungen oder Beschädigungen minimiert. Darüber hinaus besteht ein weiterer Vorteil in einer erhöhten Prozesssicherheit und einer verbesserten Taktung der Abfülllinie, da der kontinuierliche Transport in aufrechter Position und die Fixierung der Behälter auf dem Vakuumband eine gleichmäßige und störungsfreie Führung der Behälter ermöglicht.

Gemäß einem Aspekt der Erfindung verläuft das Vakuumband bevorzugt in einer horizontalen Ebene. Die horizontale Anordnung des Vakuumbandes bedeutet, dass die Behälter ohne Neigung oder Drehung in einer horizontalen Ebene befördert werden, die parallel zum Boden verläuft. Ein Vorteil dieser Ausgestaltung liegt in einem sicheren Stand der Behälter auf dem Vakuumband in ihrer aufrechten Position. Ein weiterer Vorteil zeigt sich in einer erhöhten Prozessgeschwindigkeit und einer verbesserten Reinigungsleistung, da die Behälter kontinuierlich und ohne Unterbrechung sicher durch die Reinigungsvorrichtung geführt werden können. In einer abgewandelten Ausführungsform kann das Vakuumband auch schräg zur horizontalen Ebene mit einem Winkel von maximal 30° verlaufen. Dies erhöht einerseits die Flexibilität bei der Gestaltung der Reinigungsvorrichtung, und stellt andererseits sicher, dass die Behälter beim Transport auf dem Vakuumband nicht ins Rutschen kommen.

Gemäß einer weiteren Ausführungsform der Reinigungsvorrichtung umfasst die Transporteinrichtung mindestens zwei Führungsstangen, die sich entlang der Transportrichtung erstrecken und quer zur Transportrichtung in gleichbleibendem Abstand zueinander angeordnet sind, um eine seitliche Führung der Behälter zu gewährleisten. Die Führungsstangen sind bspw. als längliche Elemente ausgeführt, die entlang der Transportrichtung der Behälter verlaufen und so positioniert sind, dass sie einen konstanten Abstand zueinander einhalten, wobei der Abstand bevorzugt an die Größe der Behälter anpassbar ist. Durch diese Anordnung wird sichergestellt, dass die Behälter während des Transports seitlich stabilisiert werden und nicht aus der vorgesehenen Transportbahn geraten. Ein Vorteil dieser Ausgestaltung liegt in einer verbesserten Prozesssicherheit, da die Behälter zuverlässig geführt werden, was insbesondere bei empfindlichen oder leichten Materialien ein Herausfallen der Behälter aus der Transporteinrichtung sowie eine Beschädigung oder ein Verkanten der Behälter verhindert. Zudem kann ein gleichmäßiger und störungsfreier Durchlauf der Behälter durch die Reinigungsstation erzielt werden, was die Effizienz und die Taktung der Gesamtanlage positiv beeinflusst.

Gemäß einem weiteren Aspekt der Erfindung wird ein Verfahren zur Reinigung von einseitig offenen Behältern bereitgestellt, bei dem die Behälter seriell einem Vakuumband zugeführt werden. Das Vakuumband übernimmt dabei die Aufgabe, die Behälter entlang einer definierten Transportrichtung in aufrechtstehender Position zu transportieren, wobei die Öffnung der Behälter nach oben ausgerichtet ist. Während dieses Transports wird ein ionisiertes und/oder gereinigtes Prozessgas, insbesondere ionisierte oder gereinigte Luft, unter Druck durch die Öffnung in das Innere der Behälter eingesprüht.

Das ionisierte und/oder ein gereinigte Prozessgas, insbesondere die ionisierte oder gereinigte Luft, wird bspw. durch eine Ausblaseinheit unter Druck ausgegeben und durch die Öffnung in die Behälter gesprüht, während die Behälter auf dem Vakuumband in aufrecht stehender Position transportiert werden. Dabei ist die Ausblaseinheit bevorzugt in einem Gehäuse angeordnet und das Vakuumband verläuft durch das Gehäuse, wobei in dem Gehäuse ein Unterdruck erzeugt wird, während die Behälter in aufrecht stehender Position mittels des Vakuumbands durch das Gehäuse transportiert werden.

In einer bevorzugten Ausführungsform des Verfahrens wird während des Einsprühens des ionisierten und/oder gereinigten Prozessgases in die aufrecht stehenden, einseitig offenen Behälter eine Absaugung des Prozessgases mittels einer Absaugeinrichtung durchgeführt, wodurch die vom Prozessgas im Inneren des Behälters aufgewirbelten Partikel gezielt mit dem Prozessgas aus dem Inneren der Behälter entfernt werden können. Die Absaugeinrichtung ist hierbei so angeordnet und dazu ausgelegt, dass sie das in den Behälter eingeblasene Prozessgas unmittelbar nach dessen Durchströmen des Innenraums wieder aus dem Behälter absaugt, wobei insbesondere auch die mit dem Prozessgas aufgewirbelten Partikel und Verunreinigungen effizient erfasst und aus dem Behälter herausgeführt werden. Mittels der Absaugeinrichtung kann dabei in der bevorzugten Ausführungsform, in der das Vakuumband durch ein Gehäuse verläuft, in dem Gehäuse ein Unterdruck erzeugt werden. Dies stellt eine verbesserte Entfernung von Partikeln aus den Behältern sicher und ermöglicht deren Abfuhr aus dem Gehäuse mittels der Absaugeinrichtung.

Diese und weitere Vorteile sowie bevorzugte Merkmale der Erfindung ergeben sich aus dem nachfolgend unter Bezugnahme auf die begleitenden Zeichnungen beschriebenen Ausführungsbeispiel, wobei die Zeichnungen zeigen:
- **Fig. 1:**: eine Darstellung eines Ausführungsbeispiels einer Reinigungsvorrichtung gemäß der Erfindung in einer perspektivischen Ansicht;
- **Fig. 2:**: eine Darstellung der Reinigungsvorrichtung von Figur 1 in einer Ansicht von vorne;
- **Fig. 3:**: eine Darstellung der Reinigungsvorrichtung von Figur 1 in einer Draufsicht;
- **Fig. 4:**: eine Detaildarstellung des in Figur 2 mit einem gestrichelten Kreis umrandeten Bereichs der Reinigungsvorrichtung;
- **Fig. 5:**: eine Darstellung der Reinigungsvorrichtung von Figur 1 in einer Seitenansicht;
- **Fig. 6:**: eine Darstellung eines Details der Reinigungsvorrichtung von Figur 5 in einer Seitenansicht;
- **Fig. 7:**: Darstellung einer Ausblaseinrichtung der Reinigungsvorrichtung der Figuren 1 bis 3 in einer Vorderansicht.

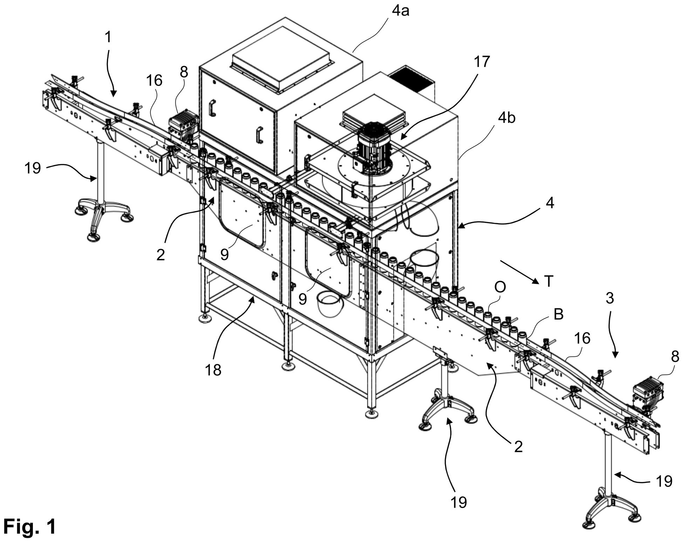

Die Figuren 1-3 zeigen eine bevorzugte Ausführungsform einer Vorrichtung zur Reinigung von einseitig offenen Behältern, wie insbesondere von Dosen, welche eine Öffnung O aufweisen. Die im Folgenden als Reinigungsvorrichtung bezeichnete Vorrichtung ist dabei zur Integration in einer Abfüllanlage zum Abfüllen von Getränken in die Behälter B vorgesehen. Die dargestellte Reinigungsvorrichtung ist modular aufgebaut und umfasst mehrere funktionale Einheiten, die entlang einer horizontalen Transportstrecke, entlang derer die Behälter B in einer Transportrichtung T seriell transportiert werden, angeordnet sind. Zur besseren Veranschaulichung sind in den Figuren zumindest teilweise die Wände eines Gehäuses 4 und von Modulgehäusen 4a und 4b der Reinigungsvorrichtung durchscheinend dargestellt, um das Innere des Gehäuses 4 bzw. der Modulgehäuse 4a und 4b zu zeigen.

Die Reinigungsvorrichtung umfasst eine Transporteinrichtung, welche eine Zufuhreinheit 1, ein Vakuumband 2 und eine Abfuhreinheit 3 umfasst, die in Transportrichtung T hintereinander angeordnet und so miteinander verbunden sind, dass die Behälter B entlang der Transportrichtung T durch die Reinigungsvorrichtung ohne Unterbruch transportiert werden können. Die Transporteinrichtung ist dabei auf bevorzugt höhenverstellbaren Stützen 19 angeordnet. Die Zufuhreinheit 1 ist in den Figuren 1-3 jeweils am linken Ende der Reinigungsvorrichtung positioniert und dient der seriellen Zuführung der Behälter B auf das Vakuumband 2. Die Behälter B werden dabei in aufrechtstehender Position mit ihrer Öffnung O nach oben weisend von der Zufuhreinheit 1 seriell auf das Vakuumband 2 übergeben. Die Abfuhreinheit 3 ist in den Figuren 1-3 jeweils am rechten Ende der Reinigungsvorrichtung angeordnet und ermöglicht eine serielle Abführung der gereinigten Behälter B. Die Zufuhreinheit 1 und die Abfuhreinheit 3 sind jeweils als Überschubtransporteure ausgebildet und können mit weiteren Transporteinrichtungen der Abfüllanlage gekoppelt werden, um die serielle Zu- und Abfuhr der Behälter B innerhalb der Abfüllanlage zu ermöglichen. Die Zufuhreinheit 1 und die Abfuhreinheit 3 enthält jeweils ein von einem Motor 8 angetriebenes Förderband. Das Vakuumband 2 umfasst ein perforiertes Transportband, welches ebenfalls von einem Motor in Transportrichtung T angetrieben und in Bezug auf die Transportgeschwindigkeit mit den Förderbändern der Zufuhreinheit 1 und der Abfuhreinheit 3 synchronisiert wird. Das perforierte Transportband des Vakuumbands 2 ist dabei mit Unterdruck beaufschlagbar, so dass die auf der Oberfläche des Vakuumbands 2 aufrechtstehenden Behälter B an einem Boden der Behälter durch den Unterdruck angesaugt und dadurch auf dem Vakuumband 2 fixiert werden können.

Entlang der Transportstrecke sind an der Transporteinrichtung seitliche Führungsstangen 16 angebracht, wobei zweckmäßig zwei durchgehende und in einer Querrichtung in einem vorgegebenen Abstand gegenüberliegende Führungsstangen vorgesehen. Dabei ist der Abstand der beiden Führungsstangen 16 bevorzugt einstellbar. Durch die Einstellung des Abstands der beiden Führungsstangen 16 kann die Führung der Behälter B in der Transporteinrichtung auf die Geometrie und die Größe der Behälter angepasst werden.

Im zentralen Bereich der Reinigungsvorrichtung befindet sich ein Gehäuse 4, das eine Reinigungsstrecke entlang der Transporteinrichtung begrenzt und auf einem Rahmengestell 18 befestigt ist. Ein in Bezug auf die Transportrichtung T stromaufwärtiger Bereich des Vakuumbands 2 verläuft dabei durch das Gehäuse 4 entlang der Reinigungsstrecke. Ein stromabwärtiger Bereich des Vakuumbands 2 befindet sich außerhalb des Gehäuses 4.

Das Gehäuse 4 weist einen als Wanne 14 ausgebildeten Boden sowie 4 Seitenwände und einen Deckel auf. In der vorderen Seitenwand des Gehäuses 4, die in Figur 1 sichtbar ist, sind Sichtfenster 9 eingebracht. Der als Wanne 14 ausgebildete Boden des Gehäuses 4 weist im Zentrum der Wanne 14 eine Öffnung auf, an der ein Rohrstutzen 15 angeordnet ist. Der Rohrstutzen 15 kann über eine nicht dargestellte Absaugleitung mit einer externen Absauganlage verbunden werden. Weiterhin sind in der Wanne 14 zusätzliche Öffnungen zur Durchführung von Absaugleitungen vorgesehen, über die der Absaugkanal 6a bzw. die Absaugstutzen 6b, 6c mit einer außerhalb des Gehäuses 4 angeordneten und hier nicht zeichnerisch dargestellten Absauganlage fluidleitend verbunden werden.

An der Oberseite des Gehäuses 4 sind zwei Modulgehäuse 4a, 4b auf den Deckel des Gehäuses 4 aufgesetzt. In dem ersten Modulgehäuse 4a ist eine Prozessgasquelle 10 mit einem Verdichter untergebracht. Die Prozessgasquelle 10 dient zur Bereitstellung eines unter Druck stehenden Prozessgases, insbesondere zur Bereitstellung von unter Druck stehender Luft. Der von dem Verdichter erzeugte Druck des von der Prozessgasquelle 10 bereitgestellten Prozessgases kann über die Leistung des Verdichters auf einen gewünschten Wert eingestellt werden. In dem zweiten Modulgehäuse 4b ist eine Vakuumpumpe 17 angeordnet. Die Vakuumpumpe 17 ist über eine Vakuumleitung 23 mit dem Vakuumband 2 verbunden, um das Vakuumband 2 mit Unterdruck zu beaufschlagen.

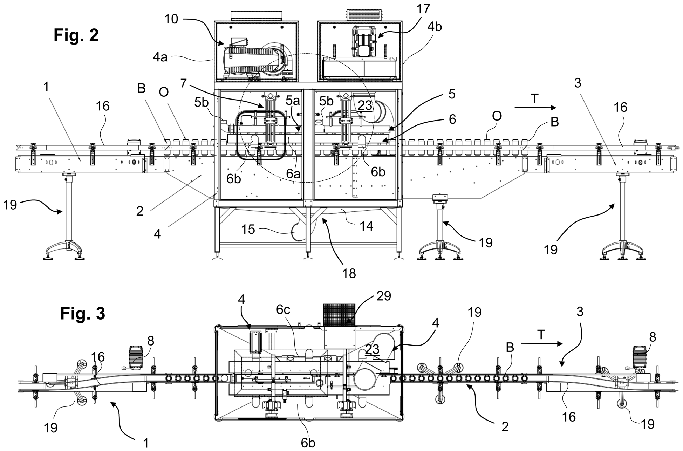

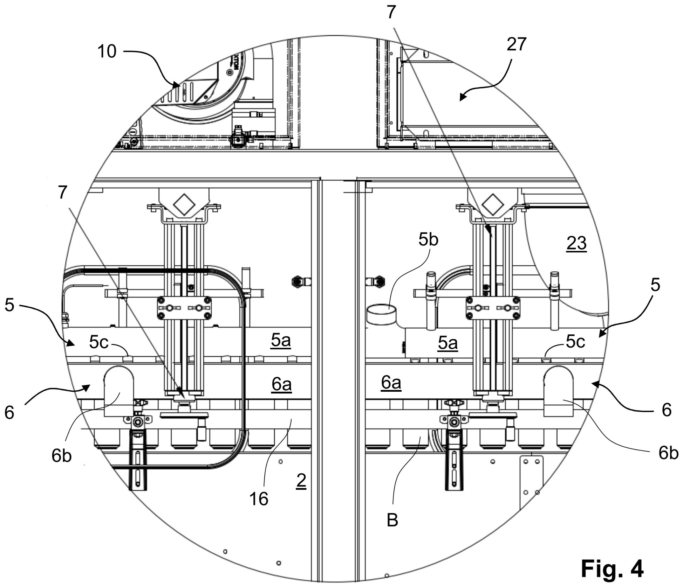

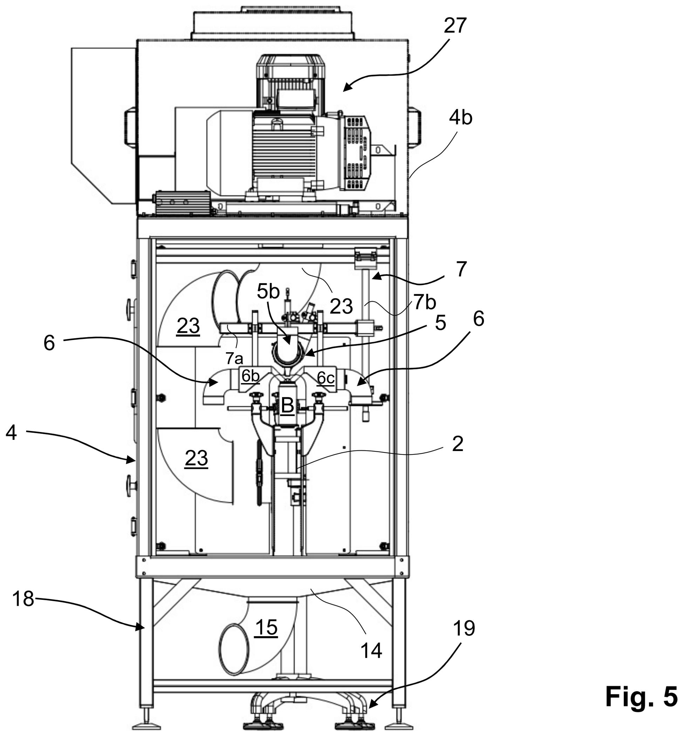

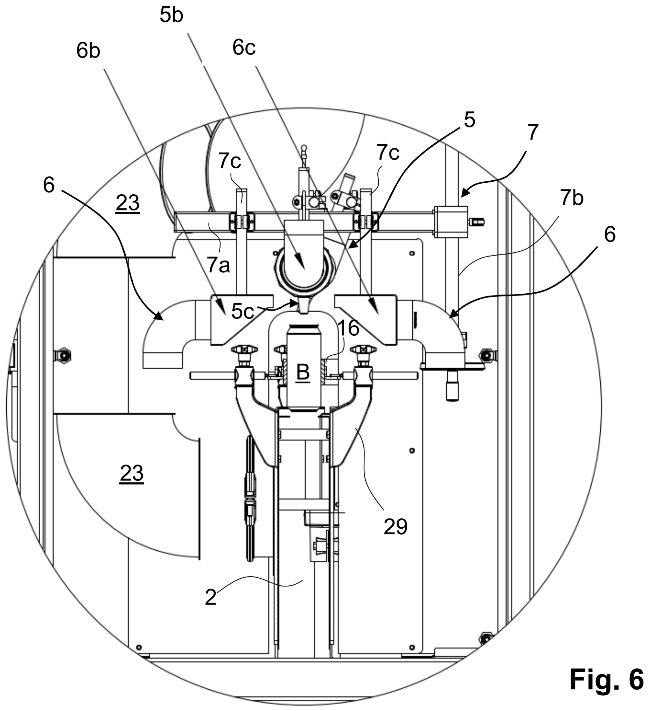

Wie aus den Figuren 2 und 5 sowie den Detailansichten der Figuren 4 und 6 ersichtlich, sind in dem Gehäuse 4 eine Ausblaseinheit 5 und eine Absaugeinrichtung 6 angeordnet. Die Ausblaseinheit 5 umfasst ein Rohr 5a mit Anschlussstutzen 5b. Das Rohr 5a erstreckt sich parallel und oberhalb des Vakuumbands 2 verlaufend in dem Gehäuse 4 entlang der durch das Gehäuse 4 definierten Reinigungsstrecke. Die Anschlussstutzen 5b der Ausblaseinheit 5 sind über hier nicht gezeigte Leitungen, die beispielsweise als Rohr- oder Schlauchleitungen ausgeführt sein können, mit einem Ausgang der Prozessgasquelle 10 verbunden, so dass das vom Verdichteter der Prozessgasquelle 10 verdichtete Prozessgas in das Rohr 5a der Ausblaseinheit 5 geleitet werden kann.

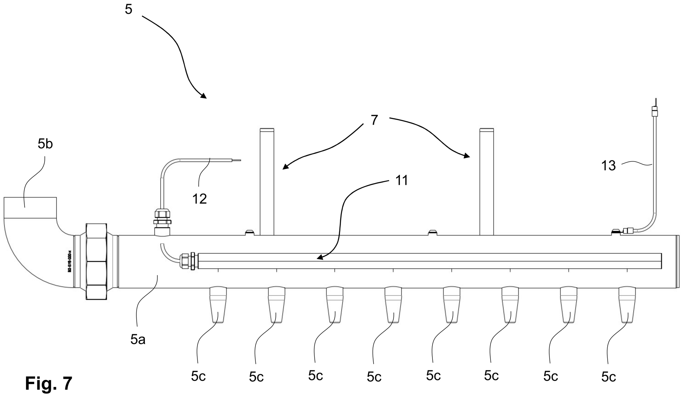

Die Ausblaseinheit 5 ist in Figur 7 im Detail gezeigt. Wie aus Figur 7 ersichtlich, sind an einer Unterseite des Rohrs 5a entlang der Transportrichtung T mehrere Ausblasdüsen 5c in einem äquidistanten Abstand zueinander angeordnet. Das von der Druckgasquelle 10 in das Rohr 5a eingeleitete Prozessgas kann über diese Ausblasdüsen 5c ausgeblasen werden. Das Rohr 5a mit den daran angeordneten Ausblasdüsen 5c ist dabei entlang der Reinigungsstrecke in dem Gehäuse 4 unmittelbar oberhalb der Öffnungen O der auf dem Vakuumband 2 platzierten Behälter B angeordnet, so dass das über die Ausblasdüsen 5c ausströmende Prozessgas durch die Öffnung O in die Behälter B eingeblasen werden kann. Innerhalb des Rohrs 5a ist ein Ionisierungsgerät zur Ionisierung des in das Rohr 5a eingebrachten Prozessgases in Form eines Ionisierungsstabs 11 angeordnet. Der Ionisierungsstab 11 ist über eine elektrische Leitung 12 mit einer Hochspannungsquelle verbunden und das Rohr 5a ist über ein Erdungskabel 13 geerdet.

Das Rohr 5a der Ausblaseinheit 5 ist über einen Verstellmechanismus 7 in Bezug auf die Oberfläche des Vakuumbands 2 höhenverstellbar. Der Verstellmechanismus 7 ist aus der Seitenansicht von Figur 5 ersichtlich und enthält einen in der Höhe verstellbaren Tragarm 7a, an dem das Rohr 5a befestigt ist. Der Tragarm 7a ist entlang eines vertikalen Führungsstabs 7b, welcher am Gehäuse 4 befestigt ist, verfahrbar und kann in wählbaren Positionen oder stufenlos an dem Führungsstab 7b fixiert werden. Der Verstellmechanismus 7 kann entweder manuell oder automatisiert, bspw. über über Stellmotoren, betätigt werden.

Die Absaugeinrichtung 6 enthält einen Absaugkanal 6a, der unterhalb des Rohrs 5a der Ausblaseinheit 5 angeordnet ist und parallel dazu verläuft. Wie aus den Seitenansichten der Figuren 5 und 6 ersichtlich, umfasst die Absaugeinrichtung 6 mehrere Absaugstutzen 6b, 6c, die fluidisch mit dem Absaugkanal 6a verbunden sind. Der Absaugkanal 6a ist über Absaugleitungen mit einer außerhalb des Gehäuses 4 angeordneten Absauganlage verbunden. Die Absaugstutzen 6b, 6c sind dabei jeweils paarweise gegenüberliegend um die Mittellängsebene der Transportstrecke im Abstand zueinander angeordnet und in Bezug auf die auf dem Vakuumband 2 durchlaufenden Behälter B so positioniert, dass sich die Absaugstutzen 6b, 6c knapp oberhalb der Öffnung O der Behälter B befinden, wie aus den Figuren 5 und 6 ersichtlich. Die Absaugstutzen 6b, 6c sind dabei in Bezug auf die Oberfläche des Vakuumbands 2 höhenverstellbar. Die Höhenverstellung erfolgt über den Verstellmechanismus 7, an dem die Absaugstutzen 6b, 6c über Befestigungsstäbe 7c befestigt sind (Figur 6)..

Zur Reinigung der Behälter B in der in den Figuren dargestellten Reinigungsvorrichtung werden die Behälter seriell von der Zufuhreinheit 1 auf das Vakuumband 2 übergeben und durchlaufen die durch das Gehäuse 4 begrenzte Reinigungsstrecke mit einer vorgegebenen Transportgeschwindigkeit entlang der Transportrichtung T. Dabei wird das von der Druckgasquelle 10 bereitgestellte Prozessgas in das Rohr 5a der Ausblaseinheit 5 geleitet und darin mittels des innerhalb des Rohrs 5a angeordneten Ionisierungsstabs 11 ionisiert. Das ionisierte und unter Druck stehende Prozessgas wird über die Ausblasdüsen 5c in die darunter auf dem Vakuumband 2 durchlaufenden Behälter B eingeblasen. Gleichzeitig erzeugt die über die Absaugleitung und den Rohrstutzen 15 an dem Gehäuse 4 angeschlossene Absauganlage einen Unterdruck in dem Gehäuse 4 und das in die Behälter B eingeblasene Prozessgas wird mittels der Absaugstutzen 6b, 6c der Absaugeinrichtung 6 aus den Behältern B abgesaugt. Dadurch werden die an den Gasionen des ionisierten Prozessgases elektrostatisch anhaftenden Partikel aus den Behältern B entfernt und über die Absauganlage aus dem Gehäuse 4 abgesaugt.

In dem sich außerhalb des Gehäuses 4 befindlichen Abschnitt des Vakuumbands 2 ist bevorzugt eine hier nicht dargestellte Kontrolleinheit angeordnet. Die Kontrolleinheit ist zweckmäßig als "empty can inspector" (ECI) ausgebildet und dient zur optischen und /oder sensorischen Inspektion der gereinigten Behälter B. Weiterhin ist stromabwärts der Kontrolleinheit bevorzugt ein ebenfalls in den Zeichnungen nicht dargestellter mechanischer Ausschleuser (Pusher) angeordnet, mit dem unzureichend gereinigte oder deformierte Behälter aus dem seriellen Strom der Behälter B entfernt werden können, indem sie vom mechanischen Ausschleuser aus dem Behälterstrom in einen zeichnerisch nicht dargestellten Seitenkanal der Transporteinrichtung, insbesondere in einen Seitenkanal der Abfuhreinheit 3, ausgeleitet werden.

### Beispiele und Validierung der Funktion durch Testergebnisse:

Zur Bestätigung der praktischen Wirksamkeit der Erfindung wurden Reinigungstests in der beschriebenen Reinigungsvorrichtung mit Getränkedosen in zwei unterschiedlichen Dosenformaten (500 ml und 330 ml) bei einer Transportgeschwindigkeit von 3900 U/min durchgeführt. Dabei wurden die Dosen vor der Durchführung des Reinigungsdurchgangs gezielt mit typischen Partikelarten (z. B. Papierstaub, Holz, Kunststoff, Zigaretten, Glaspartikel, u. a.) kontaminiert. Die Reinigung der Dosen erfolgte mit der beschriebenen Ausführungsform der Reinigungsvorrichtung ohne ein Wenden der Dosen. In 100 % der getesteten Fälle konnten die Partikel restlos aus den Dosen entfernt werden. Besonders hervorzuheben ist, dass dabei auch sehr feinkörnige und leichte Partikel, wie Papierstaub, Mehl und Glasstaub, die in herkömmlichen Wendereinrichtungen und Rinsern häufig zurückbleiben, entfernt werden konnten.

## Patentansprüche

1. Vorrichtung zur Reinigung von einseitig offenen Behältern (B) mit einer Öffnung (O), mit einer Transporteinrichtung zum Transport der Behälter (B) und einer Ausblaseinheit (5) zum Einsprühen eines Prozessgases in die Behälter (B), wobei die Transporteinrichtung ein sich in einer Transportrichtung (T) linear erstreckendes Vakuumband (2) und eine Zufuhreinrichtung (1) für eine serielle Zuführung der Behälter (B) auf das Vakuumband (2) aufweist und dazu eingerichtet ist, die Behälter (B) in aufrecht stehender Position mit ihrer Öffnung (O) nach oben weisend von der Zufuhreinrichtung (1) auf das Vakuumband (2) zu übergeben und die Behälter (B) in dieser Position auf dem Vakuumband entlang der Transportrichtung (T) zu transportieren, **dadurch gekennzeichnet, dass** die Ausblaseinheit (5) dazu eingerichtet ist, ein ionisiertes und/oder ein gereinigtes Prozessgas, insbesondere ionisierte oder gereinigte Luft, unter Druck auszugeben und durch die Öffnung (O) in die Behälter (B) zu sprühen.

2. Vorrichtung nach Anspruch 1, **gekennzeichnet durch** eine Absaugeinrichtung (6), welche während des Einsprühens des Prozessgases in die Behälter (B) das Prozessgas absaugt.

3. Vorrichtung nach einem der Ansprüche 1 oder 2, **dadurch gekennzeichnet, dass** die Absaugeinrichtung (6) einen Absaugkanal (6a) umfasst, der in einem Gehäuse (4) und insbesondere entlang des Vakuumbands (2) verlaufend angeordnet ist, wobei die Absaugeinrichtung (6) in dem Gehäuse (4) einen Unterdruck erzeugt.

4. Vorrichtung nach Anspruch 3, **dadurch gekennzeichnet, dass** der Absaugkanal (6a) wenigstens ein Absaugrohr mit einer Mehrzahl von Öffnungen aufweist, und die Absaugeinrichtung (6) dazu eingerichtet ist, den Absaugkanal (6a) mit Unterdruck zu beaufschlagen, wobei der Absaugkanal (6a) hierfür bevorzugt über einen Absauganschluss (8) mit einer von der Vorrichtung separierten Absauganlage verbindbar ist, und/oder die Absaugeinrichtung (6) mehrere Absaugstutzen (6b, 6c) enthält, die oberhalb des Vakuumbands (2) angeordnet und bevorzugt in Bezug auf das Vakuumband (2) höhenverstellbar sind.

5. Vorrichtung nach einem der voranstehenden Ansprüche, **dadurch gekennzeichnet, dass** die Ausblaseinheit (5) in einem Gehäuse (4) angeordnet ist, wobei das Vakuumband (2) durch das Gehäuse (4) verläuft.

6. Vorrichtung nach einem der voranstehenden Ansprüche, **dadurch gekennzeichnet, dass** die Ausblaseinheit (5) über einen Anschluss mit einer Prozessgasquelle (10) verbunden ist, welche das unter Druck stehende Prozessgas, insbesondere Luft, bereitstellt und hierfür bevorzugt einen Verdichter umfasst, wobei die Ausblaseinheit (5) insbesondere wenigstens ein Rohr (5a) mit einem Anschlussstutzen (5b) umfasst, wobei der Anschlussstutzen (5b) den Anschluss bildet und mit der Prozessgasquelle (10) verbunden ist und das Rohr (5a) bevorzugt eine Mehrzahl von Ausblasdüsen (5c) zum Ausblasen des Prozessgases, insbesondere der ionisierten oder gereinigten Luft, enthält, wobei das Rohr (5a) bevorzugt entlang und oberhalb des Vakuumbands (2) verlaufend angeordnet und bevorzugt in Bezug auf das Vakuumband (2) höhenverstellbar ist und die Ausblasdüsen (5c) nach unten auf das Vakuumband (2) hin gerichtet sind.

7. Vorrichtung nach einem der voranstehenden Ansprüche, **dadurch gekennzeichnet, dass** die Ausblaseinheit (5) ein Ionisierungsgerät (11) zur Ionisierung des Prozessgases, insbesondere zur Ionisierung von Luft, umfasst, wobei das Ionisierungsgerät insbesondere als Ionisierungsstab (11) ausgebildet ist, der in dem Rohr (5a) der Ausblaseinheit (5) angeordnet ist.

8. Vorrichtung nach einem der voranstehenden Ansprüche, **gekennzeichnet durch** eine Kontrolleinheit, welche stromabwärts des Vakuumbands (2) oder am Ende des Vakuumbands (2) angeordnet und zur Inspektion, insbesondere zur optischen und/oder sensorischen Inspektion, der gereinigten Behälter (B) eingerichtet ist.

9. Vorrichtung nach einem der voranstehenden Ansprüche, **dadurch gekennzeichnet, dass** die Transporteinrichtung (1, 2, 3) eine stromabwärts des Vakuumbands (2) angeordnete Abfuhreinrichtung (3) für eine serielle Abführung der gereinigten Behälter (B) umfasst, wobei die Abfuhreinrichtung (3) bevorzugt einen mechanischen Ausschleuser (Pusher) umfasst, mit dem unzureichend gereinigte oder deformierte Behälter (B) aus dem seriellen Strom der Behälter (B) entfernt werden können, wobei der mechanische Ausschleuser (Pusher) insbesondere mit der Kontrolleinheit gekoppelt und bevorzugt dazu eingerichtet ist, in Abhängigkeit eines von der Kontrolleinheit gelieferten Signals unzureichend gereinigte oder deformierte Behälter (B) aus dem seriellen Strom der Behälter (B) zu entfernen.

10. Vorrichtung nach einem der voranstehenden Ansprüche, **dadurch gekennzeichnet, dass** die Behälter (B) einen Boden aufweisen, der vom Vakuumband (2) angesaugt wird, so dass die Behälter (B) während des Transports auf dem Vakuumband (2) in ihrer aufrechten Position fixiert sind, wobei die Behälter (B) während des gesamten Transports auf dem Vakuumband (2) in ihrer aufrechten Position verbleiben und insbesondere nicht gedreht werden, wobei das Vakuumband (2) bevorzugt in einer horizontalen Ebene oder schräg zur horizontalen Ebene mit einem Winkel von maximal 30° verläuft.

11. Vorrichtung nach einem der voranstehenden Ansprüche, **dadurch gekennzeichnet, dass** die Transporteinrichtung (1, 2, 3) mindestens zwei sich entlang der Transportrichtung (T) erstreckende und quer zur Transportrichtung (T) in gleichbleibendem Abstand zueinander angeordnete Führungsstangen (16) zur seitlichen Führung der Behälter (B) umfasst.

12. Verfahren zur Reinigung von einseitig offenen Behältern (B) mit einer Öffnung (O), wobei die Behälter (B) seriell einem Vakuumband (2) zugeführt und vom Vakuumband (2) entlang einer Transportrichtung (T) in aufrecht stehender Position mit der Öffnung (O) nach oben weisend transportiert werden, **dadurch gekennzeichnet, dass** während des Transports der Behälter (B) auf dem Vakuumband (2) ein ionisiertes und/oder gereinigtes Prozessgas, insbesondere ionisierte oder gereinigte Luft, unter Druck durch die Öffnung (O) in die Behälter (B) eingesprüht wird.

13. Verfahren nach Anspruch 12, **dadurch gekennzeichnet, dass** während des Einsprühens des Prozessgases in die Behälter (B) eine Absaugung des Prozessgases mittels einer Absaugeinrichtung (6) erfolgt.

14. Verfahren nach einem der Ansprüche 12 oder 13, **dadurch gekennzeichnet, dass** das ionisierte und/oder gereinigte Prozessgas, insbesondere die ionisierte oder gereinigte Luft, durch eine Ausblaseinheit (5) unter Druck ausgegeben und durch die Öffnung (O) in die Behälter (B) gesprüht wird, während die Behälter (B) auf dem Vakuumband (2) in aufrecht stehender Position transportiert werden.

15. Verfahren nach Anspruch 14, **dadurch gekennzeichnet, dass** die Ausblaseinheit (5) in einem Gehäuse (4) angeordnet ist und das Vakuumband (2) durch das Gehäuse (4) verläuft, wobei in dem Gehäuse (4) ein Unterdruck erzeugt wird, während die Behälter (B) in aufrecht stehender Position mittels des Vakuumbands (2) durch das Gehäuse (4) transportiert werden.
